# EUROPÄISCHE PATENTANMELDUNG

(11) **EP 4 173 701 A1**
(43) Veröffentlichungstag der Anmeldung: **03.05.2023**
(21) Anmeldenummer: 21205514.9
(22) Anmeldetag: 29.10.2021
(51) Int. Cl.: B01J 21/18, C01B 32/05, C09D 11/037, H01M 4/62

(54) **HERSTELLUNGSMETHODE METALLHALTIGER SPHÄRISCH PORÖSER KOHLENSTOFFPARTIKEL**

(71) Anmelder: Technische Universität Berlin, 10623 Berlin (DE)
(72) Erfinder: Bernsmeier, Denis, 10709 Berlin (DE); Krähnert, Ralph, 13469 Berlin (DE); Paul, Benjamin, 12439 Berlin (DE)
(74) Vertreter: Hertin und Partner Rechts- und Patentanwälte PartG mbB

(57) **Zusammenfassung**

Die Erfindung betrifft ein Verfahren zur Herstellung metallhaltiger sphärisch poröser Kohlenstoffpartikel. Dazu wird bevorzugt in einem ersten Schritt ein Kohlenstoff-Präkursor mit einem strukturbildenden Templat in einem Lösungsmittel zu einer Polymerlösung polymerisiert, in einem zweiten Schritt wird die Metallverbindung der Polymerlösung hinzugegeben und schließlich in einem dritten Schritt die metallhaltigen sphärisch porösen Kohlenstoffpartikel mittels eines Aerosolsprühverfahrens gebildet.

Darüber hinaus betrifft die Erfindung ein Verfahren zur Herstellung einer Tinte und eine Verwendung der metallhaltigen sphärisch porösen Kohlenstoffpartikel als Katalysator.

## Beschreibung

Die Erfindung betrifft ein Verfahren zur Herstellung metallhaltiger sphärisch poröser Kohlenstoffpartikel. Dazu wird bevorzugt in einem ersten Schritt ein Kohlenstoff-Präkursor mit einem strukturbildenden Templat in einem Lösungsmittel zu einer Polymerlösung polymerisiert, in einem zweiten Schritt wird die Metallverbindung der Polymerlösung hinzugegeben und schließlich in einem dritten Schritt die metallhaltigen sphärisch porösen Kohlenstoffpartikel mittels eines Aerosolsprühverfahrens gebildet.

Darüber hinaus betrifft die Erfindung ein Verfahren zur Herstellung einer Tinte und eine Verwendung der metallhaltigen sphärisch porösen Kohlenstoffpartikel als Katalysator.

### Hintergrund und Stand der Technik

Metallnanopartikel auf Kohlenstoff sind häufig verwendete Katalysatoren in der heterogenen Katalyse und Elektrokatalyse. Klassischerweise werden diese Katalysatoren durch Imprägnierung des Kohlenstoffträgers mit ionischen Vorläuferspezies sowie anschließender Reduktion synthetisiert. Der Kohlenstoffträger kann auch mit vorgeformten kolloidalen Nanopartikeln nachträglich imprägniert werden. Allerding ist es dann schwierig, diese Partikel im Porensystem des Trägers homogen zu verteilen. Die gezielte Einstellung der Porenmorphologie sowie die Kontrolle der Partikelgröße und Partikelzusammensetzung stellen Probleme bei dieser Art von Synthese dar. Häufig werden bei einer kohlenstoffbasierten Synthese auch Bindemittel eingesetzt, welche die Poren oder Nanopartikel nachteilig blockieren können. Dabei wird das Bindemittel beispielsweise bei der Präparation des Katalysators auf einem Substrat verwendet, z.B. beim Ink-Coating.

Im Stand der Technik sind verschiedene Ansätze bekannt, Nanopartikel, insbesondere Metallnanopartikel, an Kohlenstoff anzubringen.

In US 2013/0183511 A1 wir ein leitfähiger mesoporöser Kohlenstoffverbundstoff mit leitfähige Kohlenstoff-Nanopartikeln offenbart, die in einer einer mesoporösen Kohlenstoffmatrix enthalten sind. Der leitfähige mesoporöse Kohlenstoffverbundstoff weist Mesoporen auf, die sich innerhalb der mesoporösen Kohlenstoffmatrix befinden und/oder durch die Oberflächen der genannten leitfähigen Kohlenstoff-Nanopartikel ziehen, wenn die leitfähigen Kohlenstoff-Nanopartikel miteinander verschmolzen sind. Im dazu eingesetzten Verfahren wird ein Präkursor in einem Verhärtungsschritt gefolgt von einer Karbonisierung behandelt. Der Präkursor umfasst ein Templat bestehend aus einem Blockcopolymer, eine phenolische Komponente, eine Aldehydkomponente und einen Säurekatalysator. Insbesondere können metallische Nanopartikel dotiert vorliegen. Allerdings ergibt sich keine optimale Verteilung der Nanopartikel am mesoporösen Kohlenstoff. Stattdessen liegen die Nanopartikel im Wesentlichen auf der Oberfläche des Trägers.

In EP 3363538 A1 wird Verfahren zur Herstellung eines mesoporösen Kohlenstoffverbundstoffes offenbart, der eine mesoporöse Kohlenstoffphase und vorgeformte Metall-Nanopartikel enthält, die sich innerhalb der mesoporösen Kohlenstoffphase befinden. Hierbei wird zunächst eine Lösung umfassend einen Kohlenstoffpräkursor bereitgestellt, wobei die Lösung auch ein Templat enthält. Nach einer Polymerisation, um den Kohlenstoffpräkursor dispergiert in dem ersten Lösungsmittel zu erhalten, erfolgt eine Abtrennung des Polymers vom ersten Lösungsmittel und die Metallnanopartikel werden dem Polymer hinzugegeben oder beide in einem zweiten Lösungsmittel zur Erhaltung einer Mischung dispergiert. Die Mischung wird daraufhin einer Wärmebehandlung und anschließend einer Karbonisierung unterzogen.

In WO 2018/150047 A1 wird ein Verfahren zur Herstellung von mesoporösem Kohlenstoff offenbart, welches Metallnanopartikel in ihren Mesoporen beinhaltet. Dabei wird mittels eines Beschichtungsverfahrens auf einem geeigneten Substrat ein mesoporöser Film gebildet. Hierdurch gelingt es eine gute Verteilung der Nanopartikel im mesoporösen Film zu erzielen. Nachteilig hieran ist jedoch, dass das im Film gebildete Porensystem in den Anwendungen keine hohe Flexibilität aufweist.

Im Stand der Technik sind auch Verfahren bekannt, die ein Aerosolsprühverfahren nutzen, um mesoporöse Kohlenstoffkugeln zu synthetisieren.

Beispielsweise wird in US 2009/0304570 A1 ein Syntheseansatz mithilfe des Einsatzes eines Sprühverfahrens für mesoporösem Kohlenstoff offenbart. Der mesoporöse Kohlenstoff beinhaltet keine Metallnanopartikel. Metalle werden lediglich als mögliche Harttemplate benannt, die allerdings in einem anschließenden Syntheseschritt entfernt werden. Somit eignet sich der damit hergestellte Kohlenstoff nicht gut für Elektrokatalysereaktionen.

US 2011/0082024 A1 offenbart ein Verfahren zur Herstellung von porösem Kohlenstoff, worin Edelmetallsalze zu einer Kohlenstoff-Präkursorlösung hinzugegeben werden. Dazu werden lediglich Harttemplate in Form von Silizium-Kugeln beschrieben.

CN 103663410 B offenbart für die Herstellung von mesoporösen Kohlenstoffpartikeln den Einsatz eines Ultraschallverdampfers. Als Vorläufer dient hochviskoses Teerpech, das vor der Zufuhr in den Ultraschallverdampfer geschmolzen wird. Die Überführung in den Ultraschallverdampfer erfolgt über einen Extruder. Die Kohlenstoffpartikel enthalten keine Metalle.

Ein effizientes, kostengünstiges und einfach reproduzierbares Verfahren zur Herstellung metallhaltiger sphärisch poröser Kohlenstoffpartikel ist aus dem Stand der Technik nicht bekannt.

### Aufgabe der Erfindung

Die Aufgabe der Erfindung war es, die Nachteile aus dem Stand der Technik zu beseitigen und ein Verfahren anzubieten, womit metallhaltige sphärisch poröse Kohlenstoffpartikel hergestellt werden können.

### Zusammenfassung der Erfindung

Die erfindungsgemäße Aufgabe wird gelöst durch die Merkmale der unabhängigen Ansprüche. Vorteilhafte Ausgestaltungen der Erfindung sind in den abhängigen Ansprüchen beschrieben.

In einer bevorzugten Ausführungsform betrifft die Erfindung Verfahren zur Herstellung metallhaltiger sphärisch poröser Kohlenstoffpartikel umfassend die nachfolgenden Schritte:
a) Polymerisation eines Kohlenstoff-Präkursors mit einem strukturbildenden Templat durch Zugabe in ein erstes Lösungsmittel zur Bildung einer Polymerlösung enthaltend Templat-Kohlenstoffpolymer-Komplexe
b) Zugabe einer Metallverbindung zu der Polymerlösung aus dem vorherigen Schritt
c) Zerstäubung und thermische Behandlung der Polymerlösung enthaltend die Metallverbindung aus dem vorherigen Schritt in einem Aerosolsprühverfahren zur Bildung metallhaltiger sphärischer Kohlenstoffpartikel, wobei während der thermischen Behandlung die Template zersetzt und innerhalb der Kohlenstoffpartikel Poren gebildet werden.

Das erfindungsgemäße Verfahren gestaltet sich als eine Abkehr vom Stand der Technik, da eine Polymerlösung enthaltend eine Metallverbindung (insbesondere Metallnanopartikel oder Metallsalz) mit einem Aerosolsprühverfahren kombiniert wird, um metallhaltige, sphärisch poröse Kohlenstoffpartikel herzustellen. Der Stand der Technik enthielt diesbezüglich keine Hinweise, dass durch den Einsatz eines Aerosolsprühverfahrens eine besonders homogene Verteilung von Metallnanopartikel in mesoporösen Kohlenstoffkugeln ermöglicht wird.

Die Gewährleistung einer vorteilhaften Nanostrukturierung der Kohlenstoffkugeln bei Anwesenheit einer Metallverbindung stellt hingegen eine überraschende Erkenntnis der Erfinder dar. In seiner Gesamtheit hat sich das Verfahren als überaus vorteilhaft erwiesen. Die hergestellten sphärischen metallhaltigen Kohlenstoffpartikel können sowohl hinsichtlich der Ausgestaltung ihrer Poren, insbesondere ihrer Porengröße, als auch hinsichtlich ihres Anteils an Metallnanopartikeln besonders gezielt eingestellt werden. Durch das Aerosolsprühverfahren werden die Metallnanopartikel zudem an und innerhalb der sphärischen, porösen Kohlenstoffpartikel homogen verteilt. Die poröse Struktur erhält der Kohlenstoff durch die Zersetzung des Templats während der thermischen Behandlung im Aerosolverfahren selbst, wodurch die Poren wiederholbar und koordiniert zusammen mit den Metallnanopartikeln eingebracht werden.

Die Herstellung der Kohlenstoffpartikel in sphärischer Form ist weiterhin vorteilhaft, da sphärische Kohlenstoffpartikel flexibler gehandhabt werden können und somit einen größeren Anwendungsbereich eröffnen. So lassen sich die metallhaltigen, sphärischen Kohlenstoffpartikel einfach lagern und können bei Bedarf zur Herstellung einer Dispersion oder Tinte dienen. Mittels Beschichtungsverfahren können die metallhaltigen, sphärischen Kohlenstoffpartikel als katalytische Schicht flexibel und komplikationsfrei für verschiedenen Anwendungen aufgetragen werden. Als einen weiteren Vorteil weisen eine Vielzahl sphärischer Kohlenstoffpartikel zusammengenommen eine erhöhte Oberfläche im Vergleich zu einer Kohlenstoffphase auf, welcher als Schicht vorliegt. Somit ergibt sich vorteilhafterweise eine größere Reaktionsfläche und Reaktivität, welche insbesondere für Anwendungen für Elektrokatalysereaktionen von großem Vorteil ist.

Die Kombination der Verfahrensschritte war für einen Fachmann nicht naheliegen. Der Fachmann konnte beispielsweise nicht erwarten, dass der Kohlenstoff eine Nanostrukturierung bei einer thermische Behandlung während des Aerosolsprühverfahrens beibehält. Insbesondere war dies nicht zu erwarten bei der Anwesenheit von metallischen Nanopartikeln oder Metallsalzen.

Die Erfinder waren mit verschiedenartigen Problemstellungen bei der Entwicklung des bevorzugten Verfahrens konfrontiert und mussten diese durch ein hohes Maß an erfinderischen Überlegungen lösen. Die Kombination der vorliegenden Verfahrensschritte führt zu einem überraschenden Synergieeffekt, der zu den vorteilhaften Eigenschaften und dem damit einhergehenden Gesamterfolg der Erfindung führt, wobei die einzelnen Merkmale in Wechselwirkung zueinanderstehen. Ein wichtiger Vorteil des erfindungsgemäßen Verfahrens ist die überaus schnelle, reproduzierbare und wirtschaftliche Syntheseprozedur.

Es hat sich als vorteilhaft gezeigt, dass durch die Kombination des Aerosolsprühverfahrens umfassend der thermischen Behandlung der metallhaltigen Templat-Kohlenstoffpolymer-Komplexe die Metallnanopartikel besonders gut an die Kohlenstoffpartikel verteilt werden können. Insbesondere der Zeitpunkt der Zugabe der Metallspezies weicht vom Stand der Technik ab, da diese erfindungsgemäß vor dem Aerosolsprühverfahren und nach der Bildung der Templat-Kohlenstoffpolymer-Komplexe hinzugegeben werden, insbesondere also vor einer sogenannten Karbonisierung. Im Stand der Technik (siehe oben) ist es stattdessen bekannt, dass die Metallspezies nach der Karbonisierung in einem zusätzlichen Schritt hinzugegeben wird. Hierbei bezeichnet die Karbonisierung bevorzugt jenen Prozess, dass der Kohlenstoff-Präkursor in andere Ausgestaltungsformen, beispielsweise zu einem Film oder sphärischen Partikeln, durch beispielsweise eine thermische Behandlung umgewandelt wird.

Im Sinne der Erfindung bezeichnet der Ausdruck "sphärisch" bevorzugt eine im Wesentlichen kugelförmige Ausgestaltung der hergestellten Kohlenstoffpartikel. Hierfür kann auch der Ausdruck "Sphärizität" verwendet werden, um die im Wesentlichen kugelförmige Ausgestaltung der Kohlenstoffpartikel zu kennzeichnen. Sphärische Kohlenstoffpartikel haben bevorzugt eine Sphärizität von 0,7, 0,8, 0,9 oder mehr.

Der Ausdruck porös bezeichnet im Sinne der Erfindung bevorzugt kleinste Aussparungen der hergestellten Kohlenstoffpartikel, sodass diese löchrig ausgebildet sind. Synonym kann hierfür auch der Ausdruck "mit Poren versehen" oder ähnliche Ausdrucksformen verwendet werden. Typische Porengrößen sind im Nanometerbereich.

Eine Polymerisation ist im Sinne der Erfindung bevorzugt eine Sammelbezeichnung für chemische Reaktionen, bei der Monomere (kurzkettige Moleküle) zu Polymeren (langkettige Moleküle) reagieren. Dabei können auch Katalysatoren zum Einsatz kommen.

Ein Präkursor bezeichnet im Sinne der Erfindung bevorzugt ein Ausgangsprodukt einer chemischen Reaktion, insbesondere der Polymerisation im Verfahrensschritt a). Der Ausdruck "Kohlenstoff-Präkursor" bezeichnet bevorzugt einen Präkursor umfassend Kohlenstoff und/oder einer Verbindung, die Kohlenstoff umfasst, welcher polymerisierbar ist.

Im Sinne der Erfindung bezeichnet ein strukturbildendes Templat bevorzugt eine chemische Verbindung und/oder ein Gemisch, welche die Struktur der Polymerphase vorgibt, welche durch den polymerisarbaren Kohlenstoff-Präkursor gebildet wird. Das strukturbildende Templat ermöglicht in diesem Sinne die Bildung einer strukturierten Polymerphase, in der durch das strukturbildende Templat erzeugten Strukturen, wie Mizellen und / oder Lamellenstrukturen, in das aus den polymerisierbaren Kohlenstoff-Präkursor gebildete Polymer eingeschlossen sind. Durch anschließende Entfernung der Templatstrukturen (z.B. Mizellen) bleiben Zwischenräume als Poren einer mithin geformten porösen Kohlenstoffphase erhalten.

Im Verfahrensschritt a) des erfindungsgemäßen Verfahrens wird der Kohlenstoff-Präkursor mit einem strukturbildenden Templat in ein erstes Lösungsmittel hinzugegeben, sodass sich eine Polymerlösung bildet.

Das Templat dient bevorzugt als Platzhalter für ein gewünschtes Porengefüge. Während des erfindungsgemäßen Verfahrens wird das Templat bevorzugt vom umgebenden Material, dem Kohlenstoff-Präkursor, eingeschlossen und hinterlässt nach ihrer Entfernung eine poröse Struktur. Vorzugsweise erfolgt die Entfernung des Templats während der thermischen Behandlung in einem Aerosolsprühverfahren. Abhängig von der Templatgröße entstehen Porenstrukturen mit Porengrößen von wenigen Mikrometern bis zu wenigen Nanometern. Materialien mit einer geordneten Porenstruktur und einer monodomalen Porengrößenverteilung können demnach bevorzugt über sogenannte Templatierungsverfahren synthetisiert werden. Bei diesem Syntheseansatz dienen Template als Platzhalter für die gewünschte Porenform.

Vorzugsweise kann sich der Kohlenstoff-Präkursor in einer Kohlenstoff-Präkursorlösung in Verfahrensschritt a) befinden, sodass sich durch die Hinzugabe des Templats in Kombination mit einem ersten Lösungsmittel bevorzugt eine Dispersion bildet.

Zu der Polymerlösung, die sich im Verfahrensschritt a) ausbildet, wird anschließend ein Metall und/oder eine Metallverbindung in Verfahrensschritt b) hinzugegeben. Insbesondere erfolgt also die Zugabe der Metallspezies vor der Karbonisierung, d. h. vor der thermischen Behandlung während des Aerosolsprühverfahrens. Durch die Hinzugabe der Metallspezies ergibt sich eine Dispersion umfassend Templat-Kohlenstoffpolymer-Komplexe und der Metallverbindung. Die Metallverbindung kann vorzugsweise in Form kolloidaler Metallnanopartikel oder als Metallsalz hinzugegeben werden. Die Weiterbehandlung der Dispersion erfolgt dann in einem Aerosolsprühverfahren gemäß des Verfahrensschritts c).

Im Sinne der Erfindung kann der Ausdruck "Metallspezies" und "Metallverbindung" synonym verwendet werden.

In Verfahrensschritt c) wird die Polymerlösung mit dem hinzugegebenen Metall und/oder der Metfallverbindung in einem Aerosolsprühverfahren zerstäubt und thermisch behandelt. Durch die Zerstäubung bilden sich Aerosole, wobei bevorzugt die Zerstäubung mittels eines Ultraschalldampfer erfolgt. Dem Ultraschallzerstäuber wird zu diesem Zweck vorzugsweise inertes Trägergas zugeführt, welches die Aerosole in eine beheizte Zone überführt. Dies kann vorzugsweise über ein Quarzrohr erfolgen. In der beheiztone Zone erfolgt die thermische Behandlung. Während der thermischen Behandlung bilden sich die metallhaltigen sphärischen Kohlenstoffpartikel, wobei das Templat zersetzt wird. Die Zersetzung erfolgt durch ein Verdampfen des Templats, sodass Poren in den sphärischen Kohlenstoffpartikeln hinterlassen werden.

Im Sinne der Erfindung bezeichnet das Zerstäuben bevorzugt ein Zerteilen der ersten Lösung mit den Templat-Kohlenstoffpolymer-Komplexen in feine Tröpfchen als Aerosole. Die entstehenden Aerosole werden auch als Spray oder Sprüh bezeichnet. Diese können entweder Tropfen bzw. Tröpfchen umfassen, welche alle denselben oder ähnliche Durchmesser aufweisen - auch monodisperses Spray genannt- oder verschieden große Tropfen enthalten.

Im Sinne der Erfindung bezeichnet eine thermische Behandlung die Zufuhr von Wärme zu höheren Energien.

Während der thermischen Behandlung werden die metallhaltigen sphärisch porösen Kohlenstoffpartikel gebildet. Dabei wird insbesondere das Templat zersetzt und hinterlässt Poren in den Kohlenstoffpartikeln. Die Metallspezies liegt verteilt innerhalb der porösen sphärischen Kohlenstoffpartikel vor. Die gebildeten metallhaltigen sphärischen Kohlenstoffpartikel weisen bevorzugt einen Durchmesser 50 nm (Nanometer) bis 5 µm (Mikrometer), bevorzugt 100 nm bis 2 µm, besonders bevorzugt 200 nm bis 1500 nm auf.

Im Sinne der Erfindung umfasst das Aerosolsprühverfahren bevorzugt die Zerstäubung, die thermische Behandlung und/oder die Ablagerung der metallhaltigen sphärischen Kohlenstoffpartikel an einem Sammler, welche bevorzugt mittels eines inerten Gases zum Sammler befördert werden.

Begriffe wie "im Wesentlichen", "ungefähr", "etwa", "ca." etc. beschreiben bevorzugt einen Toleranzbereich von weniger als ± 40%, bevorzugt weniger ± 20%, besonders bevorzugt weniger ± 10%, noch stärker bevorzugt weniger als ± 5% und insbesondere weniger als ± 1% und umfassen stets den exakten Wert. "Ähnlich" und/oder "ca." beschreibt bevorzugt Größen die "ungefähr gleich" sind. "Teilweise" beschreibt bevorzugt zu mindestens 5%, besonders bevorzugt zu mindestens 10% und insbesondere zu mindestens 20%, in einigen Fällen zu mindestens 40%.

In einer weiteren bevorzugten Ausführungsform ist das Verfahren dadurch gekennzeichnet, dass der Kohlenstoff-Präkursor mindestens eine Phenolverbindung und optional mindestens eine vernetzbare Aldehydverbindung umfasst.

Phenolverbindungen oder Phenole sind bevorzugt Verbindungen, welche aus einem aromatischen Ring (Arene) und einer oder mehrerer daran gebundener Hydroxygruppen bestehen.

In einer bevorzugten Ausführungsform ist die Phenolverbindung ausgewählt ist aus der Gruppe bestehend aus Phenol, Brenzcatechin, Resorcin, Hydrochinon, Phloroglucin, Kresol, Halogenphenol, Aminophenol, Hydroxybenzoesäure und Dihydroxybiphenyl.

Die vorgenannten Phenolverbindungen, insbesondere Phenol selbst, haben sich als besonders geeignet und zuverlässig für die Polymerisation erwiesen.

Im Sinne der Erfindung bezeichnet eine Aldehydverbindung bevorzugt eine chemische Verbindung umfassend ein Aldehyd. Ein Aldehyd bezeichnet bevorzugt eine Verbindung mit der funktionellen Gruppe -CHO. Die funktionelle Gruppe bezeichnet hierbei jene Atomgruppe in einer Verbindung, die die Stoffeigenschaften und das Reaktionsverhalten der Verbindung maßgeblich bestimmt. Aldehyde sind reaktive Verbindungen und lassen sich sehr leicht beispielsweise zur Carbonsäure oxidieren.

Eine vernetzbare Verbindung bezeichnet im Sinne der Erfindung bevorzugt die Fähigkeit eines Moleküls oder eines Molekülbestandteils, sich zu einem dreidimensionalen Netzwerk zu verknüpfen.

In einer bevorzugten Ausführungsform ist die vernetzbare Aldehydverbindung ausgewählt aus einer Gruppe bestehend aus Formaldehyd, Organoaldehyd und/oder Organodialdehyd, dargestellt durch die Formeln HCHO, R-CHO und OHC-R-CHO, wobei R einen Rest meint, welches ein geradkettiges, verzweigtes oder zyklisches Kohlenwasserstoff ist und entweder gesättigt oder ungesättigt sein kann und typischerweise 1, 2 oder 3 Kohlenstoffatome enthält und bis zu 4, 5, 6, 7, 8, 9 oder 10 Kohlenstoffatome enthalten kann, bevorzugt Formaldehyd ist.

Zudem ist es bevorzugt, dass im Falle einer Organodialdehyd-Verbindung diese Glyoxal ist. Passende Beispiele für Organoaldehyde umfassen Acetaldehyd, Propionaldehyd, Butyraldehyd, Valeraldehyd, Hexanal, Crotonaldehyd, Acrolein, Benzaldehyd und/oder Furfural.

Beispiele für passende Organodialdehyde umfassen Glyoxal, Malondialdehyd, Succinaldehyd, Glutaraldehyd, Adipaldehyd, Pimelaldehyd, Suberaldehyd, Sebacaldehyd, Cyclopental-Dialdehyd, Terephtaldehyd und/oder Furfuraldehyd.

In einer bevorzugten Ausführungsform ist das Verfahren dadurch gekennzeichnet, dass das erste Lösungsmittel aus dem Verfahrensschritt a) ein protisches Lösungsmittel ist.

Ein protisches Lösungsmittel bezeichnet bevorzugt ein Lösungsmittel, welches in der Lage ist, Wasserstoffatome als Protonen abzuspalten.

Ein protisches Lösungsmittel kann beispielsweise ein Lösungsmittel sein, das eine oder mehrere der folgenden Eigenschaften aufweist: Es erlaubt Wasserstoffbrückenbindungen, d. h. die Bildung von Wasserstoffbrückenbindungen; es ist saurer Wasserstoff vorhanden, wobei ein protisches Lösungsmittel auch eine schwache oder sehr schwache Säure sein kann; und es ist dazu fähig, Salze zu lösen. Typische Beispiele von geeigneten ersten Lösungsmitteln sind niedere Alkohole wie Ethanol, Methanol usw., Wasser und, optional in Anwesenheit von Säuren. Typischerweise wird in Ausführungsformen der vorliegenden Erfindung die Polymerisation durchgeführt, bis sich Polymercluster gebildet haben, die vom ersten Lösungsmittel abgetrennt werden können, zum Beispiel durch eine Dekantierung. Bevorzugt sind diese Cluster von einer solchen Größe und Struktur, dass sie auch in einem zweiten Lösungsmittel dispergierbar sind für weitere Ausführungsformen des erfindungsgemäßen Verfahrens.

In einigen Ausführungsformen liegt die Zeitspanne für die Polymerisation eines Kohlenstoff-Präkursors mit einem strukturbildenden Templat in einem erstes Lösungsmittel zur Bildung einer Polymerlösung enthaltend Templat-Kohlenstoffpolymer-Komplexe im Bereich von 1 Minute bis 60 Minuten, vorzugsweise 5 Minuten bis 30 Minuten, noch bevorzugter 10 Minuten bis 20 Minuten.

Unter bestimmten Bedingungen kann eine solche Polykondensationsreaktion aber auch mehr als 1 h, mehr als 2 h, 6h, 12 h oder mehr al 24 h dauern. Sofern beispielsweise wenig Säure verwendet wird, ist es bevorzugt mehr Zeit für die Polymerisationsreaktion bereitzustellen.

In einer weiteren Ausführungsform ist das erste Lösungsmittel ausgewählt aus Wasser, Ethanol, Methanol, Propanol und/oder Mischungen davon. Optional ist auch zusätzlich eine Säure oder Base vorhanden.

Es kann also bevorzugt sein, dass im ersten Lösungsmittel, bevorzugt ein protisches Lösungsmittel, eine saure oder eine basische Komponente hinzugefügt wird oder bereits innerhalb des Lösungsmittels hinzugefügt ist. Es kann während des Verfahrensschritt a) während der Polymerisation oder schon davor hinzugefügt werden. Jede Säure oder Base kann bevorzugt sein, die dazu in der Lage ist, die Polymerisation zu beschleunigen, insbesondere eine Reaktion zwischen Phenol- und Aldehydverbindungen.

Der Fachmann weiß, dass Laugen wässrige Lösungen mit alkalischen/basischen Eigenschaften bezeichnet, sodass eine Lauge eine Base in wässriger Lösung umfasst und daher alle Laugen auch Basen sind.

Vorzugsweise kann die Säure eine schwache Säure sein, beispielsweise eine schwache organische Säure wie Essigsäure, Propionsäure und/oder Citronensäure, oder eine schwache anorganische Säure wie Phosphorsäure. Es kann ebenfalls der Einsatz einer starken Säure bevorzugt sein, wie beispielsweise Mineralsäure, Hydrochlorsäure, Salzsäure, Bromwasserstoffsäure, Iodwasserstoffsäure, Schwefelsäure und/oder Trifluormethansulfonsäure.

In einer weiteren bevorzugten Ausführungsform ist das Verfahren dadurch gekennzeichnet, dass nach dem Verfahrensschritt a) eine Trennung der Templat-Kohlenstoffpolymer-Komplexe von dem ersten Lösungsmittel über ein Trennverfahren erfolgt.

Durch die Trennung liegen die Templat-Kohlenstoffpolymer-Komplexe und das erste Lösungsmittel im Wesentlichen separat voneinander vor. Für das weitere Verfahren sind insbesondere die abgetrennten Templat-Kohlenstoffpolymer-Komplexe relevant.

Nachdem das Polymer bzw. die Polymerlösung enthaltend Templat-Kohlenstoffpolymer-Komplexe vom ersten Lösungsmittel getrennt wurden, kann es in einigen Ausführungsformen optional gewaschen werden, zum Beispiel mit einem wässrigen Lösungsmittel, und anschließend von der Waschlösung abgetrennt werden. In einigen Ausführungsformen können solche Wasch- und Trennschritte einmal oder mehrmals wiederholt werden. Vorteilhafterweise können durch die Waschung insbesondere unerwünschte Verbindungen und/oder Substanzen entfernt werden, sodass eine höhere Reinheit und/oder ein verbessertes Reaktionsverhalten erzielt werden kann. Weiterhin ist es von großem Vorteil, dass nach der Waschung das Polymer bzw. die Polymerlösung für eine Lagerung aufbereitet, beispielsweise gefriergetrocknet werden kann. Dadurch können bei einer Produktion gemäß des erfindungsgemäßen Verfahrens die Prozesse zeitlich und örtlich entkoppelt werden. Ein gefriergetrocknetes Polymergemisch kann vorteilhaft lange (zwischen)gelagert werden, sodass anschließenden Prozessschritte zu einen beliebigen Zeitpunkt später fortgesetzt werden können.

In einer weiteren bevorzugten Ausführungsform ist das Verfahren dadurch gekennzeichnet, dass das Trennverfahren durch eine Sedimentierung, eine Filtration, eine Zentrifugation, eine Abscheidung, eine Extraktion, eine Destillierung und/oder besonders bevorzugt durch eine Dekantierung stattfindet.

Im Sinne der Erfindung bezeichnet eine Sedimentierung das Absinken von den feinen unlöslichen Templat-Kohlenstoffpolymer-Komplexen auf dem Boden eines Bechers, Behälters und/oder Reagenzglases.

Im Sinne der Erfindung bezeichnet das Abgießen durch einen Filter, beispielsweise durch ein Sieb oder ein Filterpapier. Das erste Lösungsmittel fließt problemlos durch die Poren des Filters. Man bezeichnet die austretende Flüssigkeit auch als Filtrat. Der unlösliche Feststoff des Templat-Kohlenstoffpolymer-Komplexes sind größer sind als die Poren des Filters. Dieser bleibt im Filter zurück. Dies bezeichnet man auch als Niederschlag. Unter vermindertem Druck verläuft eine solche Filtration wesentlich schneller, was auch bevorzugt sein kann.

Im Sinne der Erfindung bezeichnet die Zentrifugation das Anwenden eines Apparates, dass sich vorzugsweise so schnell um eine Achse dreht, dass durch die Fliehkraft beispielsweise Reagenzgläser an beweglichen Seitenarmen in die Waagerechte gebracht werden. Auch durch die Fliehkraft bedingt, verläuft das erste Lösungsmittel nicht. Die Fliehkraft drückt die Templat-Kohlenstoffpolymer-Komplexe fest an den Boden des Reagenzglases. Da dies bei hohem Druck geschieht, bleiben die Templat-Kohlenstoffpolymer-Komplexe auch noch nach der Zentrifugation am Boden haften.

Eine Abscheidung bezeichnet vorzugsweise den Einsatz eines Scheidetrichters. Dazu wird das erste Lösungsmittel mit dem Templat-Kohlenstoffpolymer-Komplexen beide eng miteinander vermengt, sodass sich ein heterogenes Gemisch bildet, welches man als Emulsion bezeichnet. Gibt man das Gemisch in einen Scheidetrichter, so findet eine Trennung statt und man erhält zwei Phasen: Die untere Phase enthält die Flüssigkeit mit der größten Dichte, die obere Phase wird durch die Flüssigkeit mit der kleineren Dichte gebildet.

Eine Extraktion bezeichnet bevorzugt das Herauslösen von Stoffen mithilfe eines weiteren Lösungsmittels. Dieses Verfahren beruht auf der unterschiedlichen Löslichkeit der einzelnen Stoffe. Eine Extraktion kann ebenfalls mit einem Scheidetrichter durchgeführt werden.

Im Sinne der Erfindung umfasst eine Destillierung zunächst das Sieden des ersten Lösungsmittels mit dem Templat-Kohlenstoffpolymer-Komplexen, wobei der entstehende Dampf, der sich aus den verschiedenen flüchtigen Komponenten der zu trennenden Lösung zusammensetzt, in einem Kondensator durch Abkühlen wieder verflüssigt und im Anschluss das Kondensat aufgefangen.

Eine Dekantierung beschreibt vorzugsweise das Abgießen des ersten Lösungsmittels, sodass die Templat-Kohlenstoffpolymer-Komplexe übrigbleiben.

Die beschrieben Trennverfahren haben sich als besonders einfach, zuverlässig und schnell erwiesen, die günstig und praktikabel in ihrer Umsetzung sind.

In einer weiteren bevorzugten Ausführungsform ist das Verfahren dadurch gekennzeichnet, dass das strukturbildende Templat ein Templat zur Bildung von Mizellen- oder Lamellenstrukturen und ein amphiphiles Molekül ist, bevorzugt ein Tensid, besonders bevorzugt ein Tensid umfassend nichtionischen, kationischen, anionischen und/oder zwitterionischen Tensiden und/oder Gemische davon.

Beispiele für nichtionische Tenside sind Polyethylenglykolalkylether, Glucosidalkylether, Polyethylenglycoloctylphenylether, Polyethylenglycolalkylphenylether, Glycerinalkylester, Polyoxyethylenglycolsorbitanalkylester, Blockcopolymere z. B. aus Polyethylenglycol und/oder Polypropylenglykol, wie z.B. Poloxamere, und/oder polyethoxyliertes Talgamin.

Beispiele für kationische Tenside sind Cetrimoniumbromid, Cetylpyridiniumchlorid, Benzalconiumchlorid, Benzethoniumchlorid, Dimethyl-Dioctadecylammoniumchlorid und/oder Dioctadecyldimethylammoniumbromid.

Beispiele für geeignete anionische Tenside sind Alkylsulfate, Alkylsulfonate, Alkylphosphate und Alkylcarboxylate. Spezifische Beispiele für Alkylsulfate sind Ammoniumlaurylsulfat, Natriumlaurylsulfat und die verwandten Alkyläthersulfate, wie wie Natriumlaurethsulfat und Natriummyrethsulfat. Weitere Beispiele für anionische Tenside sind Natriumstearat, Natriumlauroylsarkosinat, Perfluornonanoat und/oder Perfluoroctanoat.

Beispiele für zwitterionische Tenside sind Phospholipide, wie Phosphatidylserin, Phosphatidylcholin, Phosphatidylethanolamin und/oder Sphingomyelin. Weitere Beispiele sind (3-[(3-Cholamidopropyl)dimethylammonio]-l-Propansulfonat) (CHAPS), Cocamidopropylhydroxisultain und/oder Cocamidopropylbetain.

Die durch das strukturbildende Templat gebildeten Mizellen können bevorzugt jede beliebige Form annehmen, z. B. können sie sphärisch, kugelförmig, ellipsoidisch oder zylindrisch sein. In einigen Ausführungsformen kann das strukturbildende Templat auch andere Strukturen als Mizellen bilden, wie z. B. Lamellen.

Das strukturbildende Templat in der Lösung vom Kohlenstoff-Präkursor erlaubt die Bildung einer strukturierten polymeren Phase, wobei die Mizellen und/oder Lamellen in das aus dem polymerisierbaren Kohlenstoff-Präkursor gebildete Polymer eingeschlossen werden. Die Mizellen und/oder Lamellen wirken bevorzugt als Templatstrukturen. Da in der Folge die Templatstrukturen (z. B. Mizellen) entfernt werden, sind die zurückbleibenden Räume die Porenräume innerhalb des porösen Kohlenstoffs.

Bevorzugt sind als Einsatz für Template sogenannte Softtemplate, d. h. Template, während der Synthese zersetzt werden. Beispielsweise können hierfür hyperverzweigte Polymere, Dendrimere und/oder hochmolekulares Polyethylenoxid eingesetzt werden. Vorzugsweise können auch kleine Kugeln umfassend Polymethylmethacrylat (PMMA), sogenannte PMMA-Kugeln, als Templat, insbesondere als Softtemplat eingesetzt werden.

Softtemplate sind verformbare strukturdirigierende Einheiten. Dies können Mizellen oder lamellare Strukturen aus amphiphilen Polymeren (oftmals Block-Copolymere) sein. Typischerweise entstehen die Mizellen oder Lamellen oberhalb einer kritischen Konzentration eines in einem Lösungsmittel dispergierten Polymers. Zu den Softtemplaten gehören auch dendritische oder hyperverzweigte Kern-Schalenpolymere, wobei Kern und Schale der Polymere unterschiedliche Hydrophilizitäten zeigen, somit auch amphiphil sind.

Allgemein gesprochen bezeichnen verzweigte Polymere bevorzugt ein Polymer, wenn lineare Kettenmoleküle an einem Kernbaustein verknüpft sind. Man spricht in diesem Zusammenhang von sogenannten Sternpolymeren. Führt man in die einzelnen Zweige eines Sternpolymers statistisch Verzweigungszentren ein, so gelangt man zu hyperverzweigten Polymeren, die keine radiale Symmetrie besitzen. Dendrimere erhält man schließlich, wenn in die einzelnen Arme eines Sternpolymers wohldefiniert Verzweigungspunkte eingebaut werden, so dass sich eine perfekt verzweigte, zentrosymmetrische Architektur ausbildet.

Vorzugsweise können auch sogenannte Harttemplate als Templat eingesetzt werden. Harttemplate bezeichnen feste Strukturen, die in einem zusätzlichen Syntheseschritt entfernt werden müssen. Hardtemplate sind starre sturkturdirigierende Einheiten. Zu nanostrukturierte Hardtemplaten zählen Metalle, Oxide, oftmals Siliziumoxide (z.B. MCM-Gruppe, SBA-Gruppe, FDU-Gruppe, KIT-Gruppe, MSU-Gruppe, TUD-Gruppe, HMM-Gruppe, FSM-Gruppe) sowie Kohlenstoffe (z.B. CMK-Gruppe). Es kann sich bei diesen Hardtemplaten um einzelne Nanopartikel oder um nanostrukturierte größere Gebilde handeln. Beispielweise können als Harttemplate auch Nanopartikel umfassend Silizium eingesetzt werden. Zur Entfernung des Harttemplats kann beispielsweise Fluorwasserstoff und/oder eine Lauge eingesetzt werden.

In einer weiteren bevorzugten Ausführungsform ist das Verfahren dadurch gekennzeichnet, dass das strukturbildende Templat ein amphiphiles Polymer, bevorzugt ein amphiphiles Block-Copolymer, besonders bevorzugt ein Poloxamer ist.

In einer weiteren bevorzugten Ausführungsform ist das Verfahren dadurch gekennzeichnet, dass AB-Block Copolymeren (Polyethylenoxid-block-polystyrene (PEO-PS), Polyethylenoxid-block-polymethylmethacrylat (PEO-PMMA), Poly-2-venlypyridin-block-polyallylmethacrylat (P2VP-PAMA), Polybutadien-bock-polyethyleneoxid (PB-PEO), Polyisopren-bockpolydimethylaminoethylmetacrlyt (PI-PDMAEMA), Polybutadien-bockpolydimethylaminoethylmetacrlyt (PB-PDMAEMA), Polyethylen-block-polyethylenoxid (PE-PEO), Polyisobutylen-block-po-lyethylenoxid (PIB-PEO) und Poly(ethylen-co-buty-len)-block-poly(ethylenoxid) (PEB-PEO), Polystyrol-block-poly(4-vinylpyridin) (PS-P4VP), Polyisopren-block-polyethyleneoxid (PI-PEO), Polydimethoxyanilin-block-polystyrol (PDMA-PS),
Polyethylenoxid-block-poly-n-utylacrylat (PEO-PBA), Polybutadien-bock- poly(2-vinylpyridin (PB-P2VP)), Polyethylenoxid-block-polylactid (PEO-PLA), Polyethylenoxid-block-polyglycolid (PEO-PLGA), Polyethylenoxid-block-polycaprolacton (PEO-PCL), Polyethylen-blockpolyethylenglycol (PE-PEO), Polystyrol-block-polymethylmethacrlyt (PS-PMMA), Polystyrol-block-polyacrylsäure (PS-PAA), polypyrrol-block-polycaprolacton (PPy-PCL), Polysiliconblock-polyetylenoxid (PDMS-PEO),
ABA-Block Copolymeren (Polyethylenoxid-block-polybutadien-block-polyethylenoxid (PEO-PB-PEO), Polyethylenoxid-block-polypropylenoxid-block-polyethylenoxid (PEO-PPO-PEO), Polypropylenoxid-block-polyethylenoxid-block-polypropylenoxid (PPO-PEO-PPO), Polyethylenoxid-block-polyisobutylen-block-polyethylenoxid (PEO-PIB-PEO), Polyethylenoxid-block-polybutadien-block-polyethylenoxid (PEO-PB-PEO)), Polylactid-block-polyethylenoxid-block-polylactidd (PLA-PEO-PLA),
Polyglycolid-block-polyethylenoxid-block-polyglycolid (PGLA-PEO-PGLA), Polylactid-cocaprolacton-block-polyethylenoxid-block-polylactid-co-caprolacton (PLCL-PEO-PLCL), Polycaprolacton-blockpolytetrahydrofuran-blockpolycaprolacton (PCL-PTHF-PCL), Polypropylenoxid-block-Polyethylenoxid-block-polypropylenoxid (PPG-PEO-PPG), Polystyrol-block-polybutadien-block-polystyrol (PS-PB-PS), Polystyrol-block-polyethylen-ranbutylen-block-polystyrol (PS-PEB-PS), Polystyrol-block-polyisopren-block-polystyrol (PS-PI-PS),
ABC-Block Copolymeren (Polyisopren-block-polystyrol-block-polyethyleneoxid (PI-PS-PEO), Polystyrol-block-Polyvinylpyrrolidon-block- polyethyleneoxid (PS-PVP-PEO), Polystyrol-block-poly-2-venylpyridin-block-polyethylenoxid (PS-P2VP-PEO), Polystyrol-block-poly-2-venylpyridin-block-polyethylenoxid (PS-P2VP-PEO), Polystyrol-block-polyacrylsäurepolyethylenoxid (PS-PAA-PEO)), Polyethylenoxid-block-polylactid-block-decan (PEO-PLAdecan), sowie anderen amphiphilen Polymeren (Polyethylenoxid-alkylether (PEO-Cxx), z.B. Brij35, Brij56, Brij58) oder Gemische dieser, vorzugsweise PEO-PB, PEO-PPO, PEO-PB-PEO, PEO-PPO-PEO,
ABCD-Block Copolymere oder höherwertige Block Copolymere als strukturbildendes Templat verwendet werden, wobei A, B, C und D für chemisch unterschiedliche Polymersegmente darstellen.

In einer weiteren bevorzugten Ausführungsform ist das Verfahren dadurch gekennzeichnet, dass die Metallverbindung ein kolloidales Metallpartikel ist, bevorzugt ein kolloidales Nanopartikel. Vorzugsweise kann auch ein Metallsalz, bevorzugt ein Metallnitrat, Metallhalogenid, Metallsulfat, Metallacetat, Metallcitrat, Metallalkoxid oder deren Gemische, als Metallverbindung eingesetzt werden.

In einer weiteren bevorzugten Ausführungsform ist das Verfahren dadurch gekennzeichnet, dass die Metallverbindung ein Element und/oder Verbindung und/oder Gemisch aus Zinn, Wolfram, Molybdän, Tantal, Niob, Kupfer, Argon, Gold, Zink, Cadmium, Quecksilber, Chrom, Mangan, Rhenium, Eisen, Ruthenium, Osmium, Cobalt, Rhodium, Iridium, Nickel, Palladium, Platin, bevorzugt Platin, Palladium, Ruthenium, Rhenium, Iridium, Osmium, besonders bevorzugt Platin, Ruthenium, Rhenium und/oder Iridium, umfasst.

Im Sinne der Erfindung bezeichnet der Ausdruck kolloidal in Bezug auf die Metallnanopartikel bevorzugt deren feine Verteilung innerhalb des zweiten Lösungsmittels.

Im Sinne der Erfindung bezeichnen Nanopartikel bzw. Metallnanopartikel bevorzugt Partikel, die im Wesentlichen Ausmaße von 1 nm bis 20 nm aufweisen. Bevorzugt sind Nanopartikel mit Ausmaßen von 1 nm bis 10 nm, bevorzugt 2 nm bis 5 nm. Solche Nanopartikel lassen sich vorteilhafterweise in die Porenwänden der hergestellten Kohlenstoffpartikel verankern.

Im Sinne der Erfindung bezeichnet ein Metallsalz bevorzugt eine chemische Verbindung aus einem Metall mit einem Salz. Als Salze sind hierfür Chloride, Acetylacetonate, Acetate, Nitrate, Hexachloroplatinsäure und auch Hydrate dieser Salze bevorzugt. Im Sinne der Erfindung bezeichnen Hydrate bevorzugt wasserhaltige Verbindungen.

In einigen Ausführungsformen sieht die vorliegende Erfindung auch die Verwendung von mehreren Metallen oder Legierungen mit solchen Metallnanopartikeln vor. Bevorzugt sind auch Kombinationen aus zwei oder mehreren Metallen, wie beispielsweise Edelmetalle umfassend Platin und Rhutenium.

Vorzugsweise weist das Metall der Metallnanopartikel eine Schmelztemperatur auf, die höher ist als die niedrigste Temperatur während der thermischen Behandlung.

Es kann auch bevorzugt sein, dass die Metallnanopartikel von einer Schutzhülle aus einem ionischen Stabilisator umgeben sind, die die Dispersion/Lösung der Metallnanopartikel in einem Lösungsmittel ermöglicht.

In einer Ausführungsform der vorliegenden Erfindung ist der ionische Stabilisator quaternäres Ammoniumkation, zum Beispiel ein quaternäres Alkylammoniumkation oder quaternäres Arylammoniumkation. Ein Beispiel für ein solches geeignetes quaternäres Ammoniumkation ist das Tetraoctyl-Ammoniumkation, wie zum Beispiel in der Verbindung Tetraoctylammoniumtriethylhydroburat. Vorgeformte stabilisierte Metallnanopartikel gemäß der vorliegenden Erfindung können hergestellt werden nach Methoden, die dem Fachmann bekannt sind, wie zum Beispiel offenbart in US-Patent 6,531,304 oder US 5,580,492. Gemäß diesem Beispiel werden solche stabilisierten Metallnanopartikel durch Umsetzung von Metallsalzen, Halogeniden, Pseudohalogeniden, Alkoholaten, Carboxylaten oder Acetylacetonaten von Metallen der Gruppen 6 - 11 mit protolysierbaren metallorganischen Verbindungen. Alternativ können auch Kolloide von Übergangsmetallen des Periodensystems der Gruppen 6 - 11, die nach anderen Methoden synthetisiert werden, beispielsweise Edelmetallkolloide mit Korrosionsschutz aus Eisen, Cobalt, Nickel oder deren Legierungen, können mit organometallischen Verbindungen. Die Schutzhülle der so hergestellten kolloidalen Ausgangsstoffe enthält reaktive Metall-Kohlenstoff-Bindungen, die mit modifizierenden Verbindungen, wie z. B. Alkohole, Carbonsäuren, Polymere, Polyether, Polyalkohole, Polysaccharide, Zucker, Tenside, Silanole, Aktivkohlen, anorganische Oxide oder Hydroxide. Beispiele für solche modifizierende Verbindungen sind 1-Decanol, 2-Hydroxypropionsäure, cis-9-Octadecensäure, Triphenylsilanol, Glucose, Polyethylenglykol, Polyvinylpyrolidon und verschiedene Tenside, wie kationische, anionische, amphiphile oder nichtionische Tenside, z. B. Di(hydrotallow)dimethylammoniumchlorid, Lauryldimethylcarboxymethylammoniumbetain, Na-Cocoamidoethyl-N-hydroxyethylglycinat, Decaethylenglycolhexadecylether, Polyethylenglykolhexadecylether, Polyoxyethylensorbitanmonolaurat.

Eine weitere Möglichkeit zur Herstellung von vorgeformten stabilisierten Metallnanopartikeln erfolgt durch Reduktion eines Metallsalzes, ausgewählt aus Zinn, Kupfer, Silber, Gold, Zink, Cadmium, Quecksilber, Chrom, Mangan, Rhenium, Eisen, Ruthenium, Osmium, Cobalt, Rhodium, Iridium, Nickel, Palladium und/oder Platin und/oder Kombinationen davon, mit Tetraalkylammoniumtriorganohydroboraten, zum Beispiel Tetraoctylammonium, Triethylhydroborat, Tetrabutylammoniumtriethylhydroborat oder, allgemeiner, Tetra(alkyl) Ammoniumtriethylhydroborat, wobei Alkyl = Cl-ClO-Alkyl, vorzugsweise C4-C8-Alkyl bezeichnet.

In einer weiteren Ausführungsform ist der ionische Stabilisator ein quaternäres Alkylammoniumkation oder ein quaternäres Alkylphosphoniumkation, wobei das Alkyl 4-10 Kohlenstoffatome in der Kette aufweist.

In einer weiteren bevorzugten Ausführungsform ist das Verfahren dadurch gekennzeichnet, dass nach dem Verfahrensschritt a) eine Trennung der Templat-Kohlenstoffpolymer-Komplexe von dem ersten Lösungsmittel über ein Trennverfahren erfolgt und die Metallverbindung zu den getrennten Templat-Kohlenstoffpolymer-Komplexen mittels eines zweiten Lösungsmittels zu einer erneuten Polymerlösung vereinigt wird.

In einer weiteren bevorzugten Ausführungsform ist das Verfahren dadurch gekennzeichnet, dass das zweite Lösungsmittel, welches zur Bildung der Dispersion dient, einen aprotisches organisches Lösungsmittel ist, bevorzugt ein zyklischen Ether, besonders bevorzugt ein Tetrahydrofuran (THF) und optional ein Alkohol umfasst. Auch ist es möglich Ethanol hinzugegeben, um insbesondere eine Polymerisierung von THF bei den eingesetzten Temperaturen während der Karbonisierung und damit auch eine Rußbildung zu vermeiden. Falls in einem nachfolgenden Schritt die Karboniserung durchgeführt wird, ist der optionale Einsatz von Ethanol nicht erforderlich.

Vorzugsweise hat das zweite aprotische Lösungsmittel ein schwaches elektrisches Dipolmoment.

Es hat sich herausgestellt, dass beim Einsatz von reinem THF es zu Verrußungen während des Aerosolsprühverfahrens kommen kann. Das liegt daran, dass das THF unter den hohen Temperaturen während der thermischen Behandlung des Aerosolsprühverfahrens zur Bildung verschiedener höhermolekularer Verbindungen neigt. Daher ist ein Gemisch aus THF und Ethanol bevorzugt, was vorteilhafterweise Rußbildungen verhindert. Als besonders geeignetes Mischungsverhältnis von Ethanol zu THF hat sich im Wesentlichen 2:1 erwiesen. Es sei angemerkt, dass reines Ethanol nicht bevorzugt verwandt wird, da die Lösung weniger stark ausgeprägt ist. Durch die Verwendung von THF als zweites Lösungsmittel kann hierdurch insbesondere eine hohe Reinheit realisiert werden.

In einer weiteren bevorzugten Ausführungsform ist das Verfahren dadurch gekennzeichnet, dass die Durchführung eines Aerosolsprühverfahren gemäß Verfahrensschritt c) folgende Schritte umfasst:
(i) Zerstäubung der Polymerlösung in einem Zerstäuber
(ii) Zufuhr eines inerten Trägergases zu dem Zerstäuber
(iii) Transport der im Zerstäuber entstandenen Aerosole durch das inerte Trägergas zu einer beheizbaren Zone zur Durchführung der thermischen Behandlung.

Der Begriff der Zerstäubung wurde bereits eingangs erläutert. Im Sinne der Erfindung bezeichnet ein Zerstäuber eine Vorrichtung, welche eine Zerstäubung durchführt. Vorzugsweise handelt es sich bei dem Zerstäuber um einen Ultraschallzerstäuber.

Als Inertgase werden im Sinne der Erfindung bevorzugt Gase bezeichnet, die sehr reaktionsträge (inert) sind, sich also an nur wenigen chemischen Reaktionen beteiligen. Der Zusatz "Träger" kommt daher, dass die während der thermischen Behandlung gebildeten methallhaltigen sphärischen Kohlenstoffpartikel durch das inerte Trägergas beispielsweise zur thermischen Behandlung befördert und/oder getragen werden.

Aerosole bezeichnen im Sinne der Erfindung bevorzugt Schwebeteilchen aus der erneuten Polymerlösung durch das zweite Lösungsmittel, die sich während der Zerstäubung im und durch den Zerstäuber bilden.

Die Größe der Kohlenstoffpartikel wird im Wesentlichen durch die Konzentration der erneuten Polymerlösung und/oder durch Parameter wie die Viskosität, der Dichte und der Oberflächenspannung bestimmt und/oder eingestellt.

Die Größe der Aerosole, welche sich im Zerstäuber bevorzugt durch Schwingungen ausbilden, lassen sich beispielsweise durch die Anregungsfrequenz und die Leistung der Zerstäubers einstellen. Die Größe und Form der Kohlenstoffpartikel resultiert aus der Größe und der Form der Aerosole.

In bevorzugten Ausführungsformen weisen die sphärischen Kohlenstoffpartikel einen Durchmesser (maximale Ausdehnung) von 50 nm bis 5 µm, bevorzugt 100 nm bis 2 µm, besonders bevorzugt 200 nm bis 1500 nm auf.

In einer weiteren bevorzugten Ausführungsform ist das Verfahren dadurch gekennzeichnet, dass der Zerstäuber ein Ultraschallzerstäuber ist.

Die Erzeugung der Aerosole als Tröpfchen erfolgt im Ultraschallzerstäuber bevorzugt mittels mechanischer Schwingungen von bis zu 3 MHz, die vorzugsweise auf den Flüssigkeitsfilm übertragen werden. Diese Schwingungen werden in der Regel durch piezokeramische Elemente erzeugt, die elektrische Schwingungen in mechanische Schwingungen umwandeln. Sie können an der Oberfläche des Flüssigkeitsfilmes zur Ausbildung von Kapillarwellen führen, die sich mit steigender Anregungsfrequenz exponentiell aufrichten.

Erreicht die Anregungsfrequenz einen bestimmten Wert, können sich Tropfen eines bestimmten Durchmessers ausbilden. Der Tropfendurchmesser sinkt mit steigender Anregungsfrequenz, höherer Dichte und/oder kleinerer Oberflächenspannung der Flüssigkeit. Dabei können Tropfengrößen von bis zu 4 µm entstehen.

In einer weiteren bevorzugten Ausführungsform ist das Verfahren dadurch gekennzeichnet, dass das inerte Trägergas Stickstoff, Kohlenstoffmonoxid, Kohlenstoffdioxid, Methan oder Gemische von Argon mit Wasserstoff, Kohlenstoffmonoxid oder Ammoniak oder ein Edelgas ist, bevorzugt Helium, Neon, Argon, Krypton oder Xenon.

Das inerte Trägergas ist bevorzugt im Wesentlichen frei von jeglichem Sauerstoff. Mögliche inerte Trägergase umfassen Stickstoffdioxid, Edelgase umfassend Helium, Neon, Argon, Krypton, Xenon, aber auch Kohlenmonoxid, Kohlenstoffdioxid, Kohlenstoff, Methan. Bevorzugt sind auch Gemische umfassend Wasserstoff und Argon, die vorzugsweise leicht reduzierbar sind. Bevorzugt kann auch Ammoniak sein. Während der thermischen Behandlung im Falle von Ammoniak findet die sogenannte Ammonolyse statt, wodurch sogenannte N-Funktionalitäten im Kohlenstoff eingebaut werden, die vorteilhafterweise zu einer besseren Interaktion des Kohlenstoffs mit protonenleitenden lonomeren führt.

In einer bevorzugten Ausführungsform ist das Verfahren dadurch gekennzeichnet, dass die Temperatur während der thermischen Behandlung zwischen 200°C und 2000°C beträgt. Besonders bevorzugt ist hierbei eine Temperatur von ca. 400 °C, bei der sich besonders stabile Kohlenstoffpartikel herausbilden. Durch die thermische Behandlung wird das Polymer in graphitierten Kohlenstoff umgewandelt, das strukturgebende Templat wird zersetzt und wandelt das Metall und/oder die Metallverbindung wird in hochaktive Metallnanopartikel um.

Die thermische Behandlung wird vorzugsweise für eine Zeitdauer im Bereich von einer Minute bis 240 Minuten, vorzugsweise von 20 Minuten bis 180 Minuten durchgeführt. Die Zeitdauer kann auch bevorzugt im Sekundenbereich liegen. Die Zeitdauer der thermischen Behandlung ist von einigen Parametern abhängig, wie beispielsweise vom Fluss der Aerosole, die vorzugsweise vom Zerstäuber in einem Heizrohr für die thermische Behandlung überführt werden. Vorzugsweise kann das Heizrohr ein Quarzrohr sein. Auch die Länge des Heizrohres kann eine Rolle spielen. Der Fluss sollte nicht so gering sein, dass sich die Kohlenstoffpartikel im Heizrohr selbst absetzen. Bevorzugt wird soviel Energie, bevorzugt Wärme, während der thermischen Behandlung zugeführt, dass das zweite Lösungsmittel und das Templat verdampft und/oder zersetzt werden. Vorzugsweise werden die Metallnanopartikel in den sphärischen Kohlenstoffkugeln stabil angeordnet. Bevorzugt werden dabei die Metalle, insbesondere Metallionen, zu Metallnanopartikeln reduziert. Auch die Schmelztemperatur des einzelnen Metalls kann ein wichtiger Parameter bei diesem Syntheseschritt sein. Bei Metallen mit geringem Schmelzpunkt (z.B. Kupfer) führt die hohe Mobilität der Atome im noch nicht gefestigten Polymergerüst dazu, dass sich vergleichsweise große Metallnanopartikel ausbilden können. Im Gegensatz dazu werden Metalle, die eine vergleichsweise hohe Schmelztemperatur haben, relativ kleine Metallnanopartikeln bilden.

Es kann bevorzugt sein, dass das Heizrohr eine Trägerplatte und Thermoelemente aufweist, wobei die Trägerplatte ein Gerüst für das Heizrohr darstellt und die Thermoelemente für die Übertragung der erhöhten Temperatur verantwortlich ist. Es kann ebenso bevorzugt sein, dass das Heizrohr für die thermische Behandlung in eine oder mehrere Heizzonen unterteilt werden kann, die eine unterschiedliche Temperatur aufweisen. Beispielsweise kann eine erste Heizzone zur Verdampfung des zweiten Lösungsmittels dienen und eine zweite Heizzone zur Karbonisierung, wobei in solch einem Fall die zweite Heizzone bevorzugt eine höhere Temperatur aufweist als die erste Heizzone.

In einer weiteren bevorzugten Ausführungsform ist das Verfahren dadurch gekennzeichnet, dass die Metallverbindung ein Metallsalz oder kolloidale Metallnanopartikel umfasst und während der thermischen Behandlung das Metallsalz zu Metallnanopartikel reduziert wird.

In einer weiteren bevorzugten Ausführungsform ist Verfahren dadurch gekennzeichnet, dass die sphärischen Kohlenstoffpartikel nach der thermischen Behandlung von einem Sammler aufgefangen werden.

Bevorzugt kann der Sammler ein Papierfilter, Watte, Wolle, insbesondere auch Glaswolle sein. Die metallhaltigen sphärischen Kohlenstoffpartikel können auch vorzugsweise von makroporösen Materialien aufgefangen werden, die insbesondere auch als Träger dienen können, wie beispielsweise Keramiken, Oxide und/oder Kohlenstoffe. Es kann in bestimmten Ausführungsformen auch bevorzugt sein, dass die metallhaltigen sphärischen Kohlenstoffpartikel in eine Waschflasche eingeleitet und anschließend in einer Flüssigkeit gesammelt werden.

In einem weiteren Aspekt betrifft die Erfindung metallhaltige sphärische Kohlenstoffpartikel herstellbar nach einem erfindungsgemäßen Herstellungsverfahren.

Die metallhaltigen sphärische Kohlenstoffpartikel sind bevorzugt dadurch gekennzeichnet, dass die Porengröße durchschnittlich kleiner 2 nm ist oder 2 nm bis 50 nm ist, bevorzugt 2 nm bis 10 nm, besonders bevorzugt 2 nm bis 6 nm. Eine Porenbereich von kleiner als 2 nm bezeichnet man auch als Mikroporen bzw. mikroporös, ein Bereich zwischen 2 nm und 50 nm als Mesoporen bzw. mesoporös und einen Bereich größer als 50 nm als Makroporen bzw. als makroporös. Bevorzugt sind die Poren Mikroporen oder Mesoporen.

In einem weiteren Aspekt betrifft die Erfindung ein Verfahren zur Herstellung einer Tinte für ein Beschichtungsverfahren umfassend die Schritte
(i) Herstellung metallhaltiger sphärisch poröser Kohlenstoffpartikel mit einem Verfahren gemäß einem Aspekt der Erfindung
(ii) Weiterverarbeitung der im Schritt (i) hergestellten metallhaltigen sphärisch porösen Kohlenstoffpartikel zu einer Tinte.

Dabei kann das Verfahren dadurch gekennzeichnet sein, dass für die Weiterverarbeitung der metallhaltigen sphärisch porösen Kohlenstoffpartikel zu einer Tinte ein lonomer, ein drittes Lösungsmittel und optional andere Zusätze verwendet werden, wobei als lonomer bevorzugt Nafion, Flemion oder auch andere, insbesondere fluorfreie Ionomere, wie z.B. sulfonierte Polyetherketone, Arylketone und/oder Polybenzimidazole verwendet werden.

Das Verfahren kann ebenfalls dadurch gekennzeichnet sein, dass als drittes Lösungsmittel ein Gemisch umfassend einem oder mehreren Alkoholen, bevorzugt Ethanol und/oder Isopropanol, verwendet wird. Bevorzugt kann auch optional Wasser eingesetzt werden. Dies erfolgt üblicherweise, damit es zu keiner exothermen Reaktion von dem Alkohol mit Luft an der Katalysatoroberfläche kommt. Wenn die Tinte in einer inerten Atmosphäre hergestellt und versprüht wird, kann auf Wasser in der Regel verzichtet werden.

In einem weiteren Aspekt betrifft die Erfindung eine Tinte herstellbar mittels des erfindungsgemäßen Verfahrens. Insbesondere können die metallhaltigen sphärischen Kohlenstoffpartikel zu der Tinte weiterverarbeitet werden.

Zwei konkrete Beispiele sollen hierfür im Folgenden angegeben werden, je ein Beispiel für die Zubereitung einer Tinte und für die heterogene Katalyse:

### Beispiel 1: Aufbereitung einer Tinte

10 mg der erfindungsgemäßen Kohlenstoffpartikel mit Platinnanopartikeln werden in einem Becherglas vorgelegt, 4 ml Reinstwasser werden zugefügt und anschließend 1 ml Isopropanol. Abschließend werden 20 µl 5 %-ige Nafionlösung zugegeben. Die Mischung wird 45-60 Minuten mit einem Ultraschallzerstäuber zu einer homogenen Tine dispergiert. Die Tine wird zügig zu einem Film weiterverarbeitet. Die Filmsynthese geschieht bevorzugt über eine Tropfbeschichtung (drop casting) oder über Sprühen auf ein geeignetes Substrat. Für Halbzelltestungen (eine Elektrode) werden vorzugsweise Glaskohlenstoffsubstrate verwendet. Bei Testungen in einer Membran-Vollzelle (Anode und Kathode) wird die Tinte direkt auf die Membran gesprüht und getrocknet.

### Beispiel 2: Hydrierungsreakton

4-Nitrophenol wird in Reinstwasser bei einer Konzentration von 1.35 mol/l vorgelegt und bevorzugt das gleiche Volumen (1ml) Natriumborhydrid hinzugefügt. 10 µl einer Dispersion der erfindungsgemäßen Kohlenstoffpartikel, die Platinnanopartikel enthalten, in Wasser wird hinzugefügt. Nitrophenol reagiert zu Aminophenol. Die mesoporösen Platin-haltigen Kohlenstoffpartikel wirken als heterogener Katalysator. Die Abnahme einer Absorptionsbande des Nitrophenols bei einer Wellenlänge von ca. 400 nm kann mit Methoden der UV/VIS-Spektroskopie verfolgt werden.

In einem weiteren Aspekt betrifft die Erfindung bevorzugt eine Verwendung der erfindungsgemäßen metallhaltigen sphärischen Kohlenstoffpartikel oder einer erfindungsgemäßen Tinte als ein Katalysator, bevorzugt in einer heterogenen Katalyse und/oder Elektrokatalyse, besonders bevorzugt als ein Katalysator in der Wasserelektrolyse, in Brennstoffzellen und/oder zur Bereitstellung eines Elektrolysekondensators und/oder zur Bereitstellung von Elektroden, Fahrzeugkatalysatoren, Sensoren und/oder Gasbehälter.

Der durchschnittliche Fachmann erkennt, dass technische Merkmale, Definitionen und Vorteile bevorzugter Ausführungsformen, welche für das erfindungsgemäßen Verfahren zur Herstellungen metallhaltige sphärische Kohlenstoffpartikel offenbart wurden, gleichermaßen für die hergestellten metallhaltige sphärische Kohlenstoffpartikel, Verfahren zur Herstellungen einer Tinte umfassend metallhaltige sphärische Kohlenstoffpartikel, eine Tinte umfassend metallhaltige sphärische Kohlenstoffpartikel sowie Verwendungen der metallhaltige sphärische Kohlenstoffpartikel oder der Tinte gelten und umgekehrt.

### FIGUREN

Im Folgenden soll die Erfindung anhand von Figuren näher erläutert werden, ohne auf diese beschränkt zu sein.

### Kurzbeschreibung der Abbildungen

- **Fig. 1**: Schematische Darstellung eines bevorzugten Verfahrens zur Herstellung metallhaltiger sphärisch poröser Kohlenstoffpartikel
- **Fig. 2**: REM-Aufnahme und Größenverteilung von Platin-haltigen Kohlenstoffpartikeln
- **Fig. 3**: REM-Aufnahme von Platin-haltigen Kohlenstoffpartikeln
- **Fig. 4**: Isotherme aus einer Physisorbtionsmessung und eine Porengrößenverteilung
- **Fig. 5**: TEM-Aufnahme, Größenverteilung und TEM-Aufnahme in hoher Auflösung von Platin-haltigen Kohlenstoffpartikeln
- **Fig. 6**: Röntgendiffraktogramm von Platin-haltigen Kohlenstoffpartikeln

### Detaillierte Beschreibung der Abbildungen

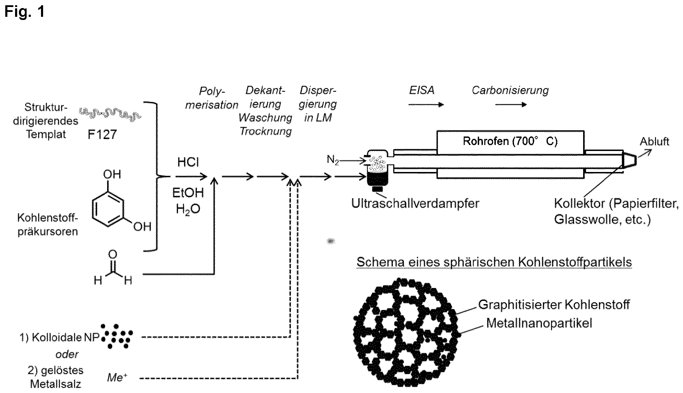

**Fig. 1** illustriert schematisch den Ablauf eines bevorzugten Verfahrens zur Herstellung von metallhaltigen sphärisch porösen Kohlenstoffpartikeln. In einem ersten Schritt wird ein strukturgebendes Templat mit einem Kohlenstoff-Präkursor in einem ersten Lösungsmittel polymerisiert. In der **Fig. 1** ist das strukturgebende Templat durch Pluronic F 127 und der Kohlenstoff-Präkursor durch Brenzcatechin gegeben. Diese werden in ein Lösungsmittel umfassend Chlorwasserstoff, Wasser und Ethanol hinzugefügt und polymerisiert. Dabei bilden sich Templat-Kohlenstoffpolymer-Komplexe. Anschließend werden in einem nächsten Schritt das Lösungsmittel und die Templat-Kohlenstoffpolymer-Komplexe über eine Dekantierung voneinander getrennt. Daraufhin kommen die Templat-Kohlenstoffpolymer-Komplexe in ein zweites Lösungsmittel, in welches das Metall und/oder die Metallverbindung hinzugegeben wird. Diese können beispielsweise kolloidale Metallnanopartikel oder ein gelöstes Metallsalz sein, wobei es zu einer Dispersion kommt. Die Dispersion wird in einem Ultraschallzerstäuber zerstäubt (*ultrasonic vaporizer*)*.* Im Ultraschallzerstäuber bilden sich während der Zerstäubung Aerosole. Diese werden von einem inerten Trägergas, welches dem Ultraschallzerstäuber zugeführt wird, in ein Heizrohr geführt. Der Ausdruck *Evaporationinduced self-assembly process* (EISA), soll vorzugsweise den autonomen Ablauf der Bildung der sphärischen Kohlenstoffpartikel kennzeichnen. Dem Heizrohr wird vorzugsweise eine hohe Temperatur zugeführt (z.B. 700°C), sodass die thermische Behandlung (Calcinieren) der Aerosole stattfinden kann. Die dabei gebildeten metallhaltigen sphärisch porösen Kohlenstoffpartikel werden dann einem Sammler (*collector*) aufgefangen und abgelagert.

Unterhalb der Graphik zur Veranschaulichung des erfindungsgemäßen Verfahrens befindet sich eine schematische Darstellung des erfindungsgemäßen metallhaltigen sphärischen Kohlenstoffpartikel, die eine Graphitstruktur aufweisen. Sie sind vorteilhafterweise elektrisch leitend und können in Elektrokatalysereaktionen eingesetzt werden. Die Metallnanopartikel sind innerhalb der sphärischen, porösen Kohlenstoffpartikel homogen verteilt. Hierbei kann mit dem erfindungsgemäßen Verfahren eine ausgezeichnete Porenordnung und Verteilung der Metallnanopartikel in den Kohlenstoffpartikeln erzielt werden. Dies überträgt sich vorteilhaft auf resultierende Eigenschaften der metallhaltigen sphärischen Kohlenstoffpartikel, welche insbesondere durch eine gute elektrische Leitfähigkeit gekennzeichnet sind.

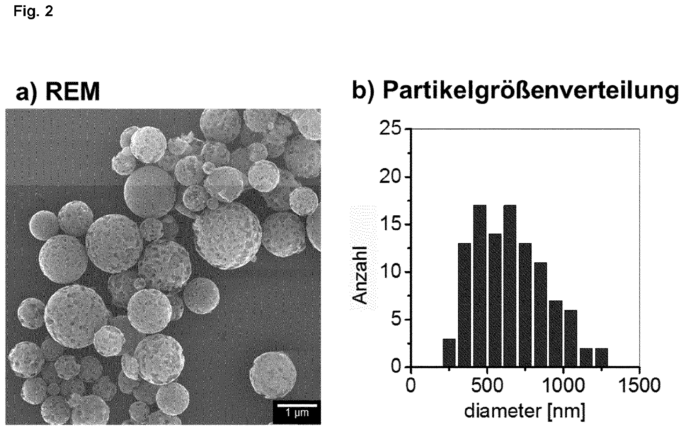

**Fig. 2** ist eine schematische Darstellung einer Rasterelektronenmikroskop-Aufnahme (REM) (englisch *scanning electron microscope*, S*EM*) und eine Größenverteilung von platinhaltigen sphärischen Kohlenstoffpartikel (Pt/C). Fig. 2a zeigt deutlich, dass die Kohlenstoffpartikel eine sphärische Form aufweisen. Aus Fig. 2b ist abzulesen, dass die meisten der platinhaltigen Kohlenstoffpartikel einen Durchmesser im Bereich von 200 nm bis 1500 nm aufweisen.

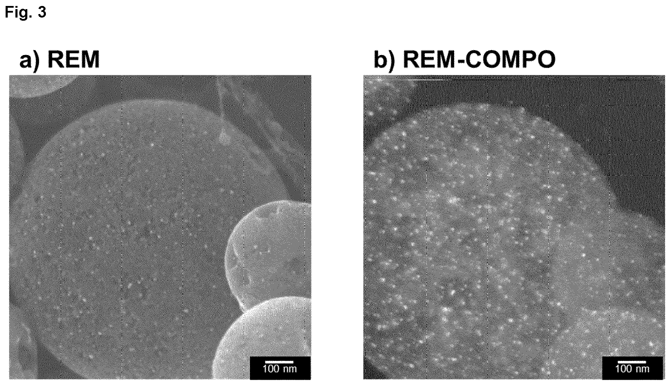

In **Fig. 3** werden weitere REM-Aufnahmen der platinhaltigen sphärischen Kohlenstoffpartikel gezeigt. In Fig. 3a liefern Sekundärelektronen Informationen über die Topologie der Partikel. In Fig. 3b erlauben Rückstreuelektronen Rückschlüsse über die chemische Zusammensetzung. Platinnanopartikel erscheinen in Fig. 3b als helle Punkte. Die homogene Verteilung der Platinnanopartikel ist deutlich sichtbar. Der Ausdruck REM-COMPO soll verdeutlichen, dass das REM-Bild im COMPO-Modus aufgenommen wurde, d.h., dass auch Informationen hinsichtlich der Zusammensetzung erlangt wurden.

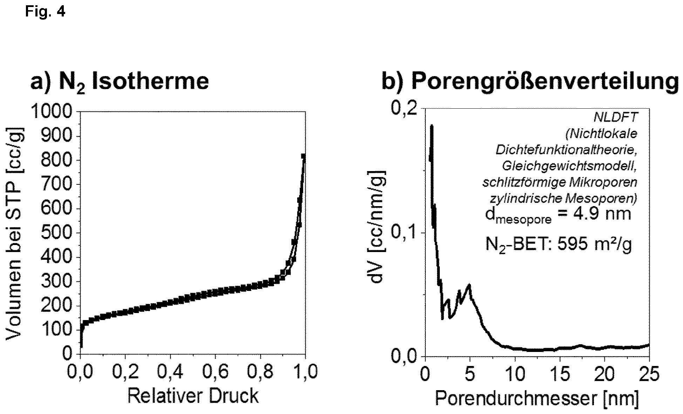

In **Fig 4****.** werden weitere Messergebnisse zu den Kohlenstoffpartikeln gezeigt. Fig. 4a zeigt eine Isotherme von Stickstoffdioxid bei einer Temperatur von 77 K. Fig. 4b zeigt eine Porengrößenverteilung aus einer diskreten Fouriertransformation (DFT) aus der Fig. 4a. Der durchschnittliche Durchmesser der Poren beträgt ca. 5 nm.

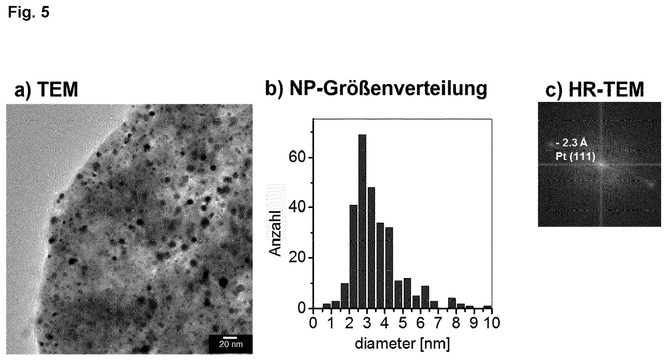

**Fig. 5a** zeigt eines Transmissionselektronenmikroskopie-Aufnahme (TEM-Aufnahme) eines platinhaltigen Kohlenstoffpartikels. Dunkle Bereiche können Platinnanopartikeln zugeordnet werden. **Fig. 5b** zeigt eine Größenverteilung der Partikeldurchmesser von den TEM-Aufnahmen. Die Abkürzung NP steht für Nanopartikel. Die Platinnanopartikeln weisen einen Durchmesser von 1 nm bis 10 nm, insbesondere 2 nm bis 5 nm auf. Die Fig. 5c zeigt eine HR-TEM-Aufnahme (englisch high resolution transmission electron microscopy, hochauslösende TEM-Aufnahme) in hoher Vergrößerung mit dem Einsatz einer schnellen Fourier-Transformation (englisch *fast Fourier transform,* FFT).

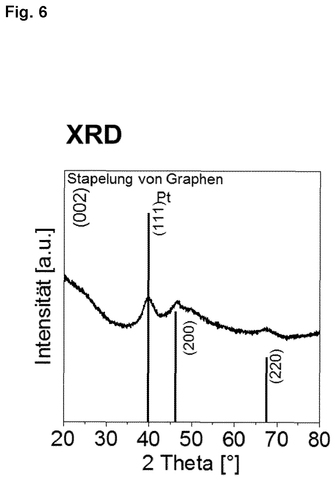

**Fig. 6** zeigt ein Röntgendiffraktogramm. Die beobachteten Reflexe können dem Platinnanopartikeln zugeordnet werden.

## Patentansprüche

1. Verfahren zur Herstellung metallhaltiger sphärisch poröser Kohlenstoffpartikel umfassend die nachfolgenden Schritte:
a) Polymerisation eines Kohlenstoff-Präkursors mit einem strukturbildenden Templat durch Zugabe in ein erstes Lösungsmittel zur Bildung einer Polymerlösung enthaltend Templat-Kohlenstoffpolymer-Komplexe
b) Zugabe einer Metallverbindung zu der Polymerlösung aus dem vorherigen Schritt
c) Zerstäubung und thermische Behandlung der Polymerlösung enthaltend die Metallverbindung aus dem vorherigen Schritt in einem Aerosolsprühverfahren zur Bildung metallhaltiger sphärischer Kohlenstoffpartikel, wobei während der thermischen Behandlung die Template zersetzt und innerhalb der Kohlenstoffpartikel Poren gebildet werden.

2. Verfahren nach dem vorhergehenden Anspruch
**dadurch gekennzeichnet, dass**
der Kohlenstoff-Präkursor mindestens eine Phenolverbindung und optional mindestens eine vernetzbare Aldehydverbindung umfasst.

3. Verfahren nach einem oder mehreren der vorhergehenden Ansprüche
**dadurch gekennzeichnet, dass**
das erste Lösungsmittel aus dem Verfahrensschritt a) ein protisches Lösungsmittel ist, vorzugsweise ein Gemisch aus einem Alkohol wie Methanol oder Ethanol, Wasser und optional einer Säure oder Base ist.

4. Verfahren nach einem oder mehreren der vorhergehenden Ansprüche
**dadurch gekennzeichnet, dass**
nach dem Verfahrensschritt a) eine Trennung der Templat-Kohlenstoffpolymer-Komplexe von dem ersten Lösungsmittel über ein Trennverfahren erfolgt.

5. Verfahren nach einem oder mehreren der vorhergehenden Ansprüche
**dadurch gekennzeichnet, dass**
das strukturbildende Templat ein Templat zur Bildung von Mizellen- oder Lamellenstrukturen und ein amphiphiles Molekül ist, bevorzugt ein Tensid, besonders bevorzugt ein Tensid umfassend aus nichtionischen, kationischen, anionischen und/oder zwitterionischen Tensiden und/oder Gemische davon.

6. Verfahren nach einem oder mehreren der vorhergehenden Ansprüche
**dadurch gekennzeichnet, dass**
das strukturbildende Templat ein amphiphiles Polymer, bevorzugt ein amphiphiles Block-Copolymer, besonders bevorzugt ein Poloxamer ist.

7. Verfahren nach einem oder mehreren der vorhergehenden Ansprüche
**dadurch gekennzeichnet, dass**
die Metallverbindung ein kolloidales Metallpartikel ist, bevorzugt ein kolloidales Nanopartikel oder ein Metallsalz, bevorzugt ein Metallnitrat, Metallhalogenid, Metallsulfat, Metallacetat, Metallcitrat, Metallalkoxid oder deren Gemische.

8. Verfahren nach einem oder mehreren der vorhergehenden Ansprüche
**dadurch gekennzeichnet, dass**
nach dem Verfahrensschritt a) eine Trennung der Templat-Kohlenstoffpolymer-Komplexe von dem ersten Lösungsmittel über ein Trennverfahren erfolgt und die Metallverbindung zu den getrennten Templat-Kohlenstoffpolymer-Komplexen mittels eines zweiten Lösungsmittels zu einer erneuten Polymerlösung vereinigt wird, wobei das zweite Lösungsmittel, welches zur Bildung der Dispersion dient, ein aprotisches organisches Lösungsmittel umfasst, bevorzugt einen zyklischen Ether, besonders bevorzugt ein Tetrahydrofuran (THF) und optional ein Alkohol..

9. Verfahren nach einem oder mehreren der vorhergehenden Ansprüche
**dadurch gekennzeichnet, dass**
die Durchführung eines Aerosolsprühverfahren gemäß Verfahrensschritt c) folgende Schritte umfasst:
(i) Zerstäubung der Polymerlösung in einem Zerstäuber
(ii) Zufuhr eines inerten Trägergases zu dem Zerstäuber
(iii) Transport der im Zerstäuber entstandenen Aerosole durch das inerte Trägergas zu einer beheizbaren Zone zur Durchführung der thermischen Behandlung.

10. Verfahren nach dem vorhergehenden Anspruch
**dadurch gekennzeichnet, dass**
der Zerstäuber ein Ultraschallzerstäuber ist.

11. Verfahren nach einem oder mehreren der vorhergehenden Ansprüche
**dadurch gekennzeichnet, dass**
die Temperatur während der thermischen Behandlung zwischen 200°C und 2000°C beträgt und/oder
die Metallverbindung ein Metallsalz oder kolloidale Metallnanopartikel umfasst und während der thermischen Behandlung das Metallsalz zu Metallnanopartikel reduziert wird.

12. Metallhaltige sphärische Kohlenstoffpartikel herstellbar nach einem Herstellungsverfahren gemäß einem oder mehreren der vorherhegenden vorhergehenden Ansprüche.

13. Verfahren zur Herstellung einer Tinte für ein Beschichtungsverfahren umfassend die Schritte
(i) Herstellung metallhaltiger sphärisch poröser Kohlenstoffpartikel mit einem Verfahren gemäß einem oder mehreren der vorhergehenden Ansprüche
(ii) Weiterverarbeitung der im Schritt (i) hergestellten metallhaltigen sphärisch porösen Kohlenstoffpartikel zu einer Tinte.

14. Tinte herstellbar mittels eines Verfahren nach dem vorherigen Anspruch.

15. Verwendung der metallhaltigen sphärischen Kohlenstoffpartikel gemäß Anspruch 13 oder einer Tinte gemäß 14 als ein Katalysator, bevorzugt in einer heterogenen Katalyse und/oder Elektrokatalyse, besonders bevorzugt als ein Katalysator in der Wasserelektrolyse, in Brennstoffzellen und/oder zur Bereitstellung eines Elektrolysekondensators und/oder zur Bereitstellung von Elektroden, Fahrzeugkatalysatoren, Sensoren und/oder Gasbehälter.
